Europäisches Patentamt

European Patent Office

Office européen des brevets

(11) Publication number: 0 158 450
A1

# (12) EUROPEAN PATENT APPLICATION

(21) Application number: 85301748.1

(22) Date of filing: 13.03.85

(51) Int. Cl.⁴: **B 62 D 5/06**
F 04 C 15/04, F 15 B 13/02

(30) Priority: 09.04.84 US 598481

(43) Date of publication of application:
16.10.85 Bulletin 85/42

(84) Designated Contracting States:
DE FR GB IT SE

(71) Applicant: GENERAL MOTORS CORPORATION
General Motors Building 3044 West Grand Boulevard
Detroit Michigan 48202(US)

(72) Inventor: Anderson, Stanley Earle
3018 Cooper Street
Saginaw Michigan 48602(US)

(72) Inventor: Franklin, Leonard Nicholas, Jr.
2177 South Van Buren Road
Reese Michigan 48757(US)

(74) Representative: Breakwell, John Neil Bower et al,
GM Patent Section Luton Office (F6) P.O. Box No. 3
Kimpton Road
Luton Beds. LU2 OSY(GB)

(54) Demand-responsive flow control valve mechanism.

(57) A demand-responsive flow control valve mechanism receives fluid flow from a power steering pump (10) and delivers a predetermined amount of fluid to an operating system such as a power steering gear (20), with excess fluid being directed to a bypass port (24), and thence to the pump or a reservoir (14).

Fluid flow to the operating system is controlled by differential areas of a valve spool (40), and a flow-regulating orifice (38) sensitive to system flow for determining the pressure differential to be applied to the differential areas. The operating system has a variable orifice (28) which serves as a demand regulator for establishing the pressure level requirements for the pump. The valve spool responds to the pressure differential and system pressure level to bypass fluid as required. A pair of check valves (50,52) are disposed in the valve spool and are operable to provide two stages of pressure relief for the operating system.

DEMAND-RESPONSIVE FLOW CONTROL VALVE MECHANISM

This invention relates to a demand-responsive flow control valve mechanism as specified in the preamble of claim 1, for example as disclosed in US-A-3 723 025.

The invention is concerned with the provision of an improved demand-responsive flow control mechanism, and, specifically, to provide a system demand control usable to reduce pressure flow to a power steering gear, for example, at neutral.

To this end a demand-responsive flow control valve mechanism is characterised by the features specified in the characterising portion of claim 1.

In a specific form of demand-responsive flow control valve mechanism in accordance with the invention, a valve spool has three pressure-responsive areas two of which, of unequal area, are opposed and connected to fluid flow on opposite sides of a flow-regulating orifice, with the larger area being downstream, to regulate system flow by moving the valve spool to open a bypass port, and a demand-regulating orifice controls system pressure on the opposed areas to effect the proper bypass flow. A first check valve operates to admit system pressure to the third area to effectively balance the valve spool, and a second check valve acting in concert with a flow restriction is operable, at a predetermined pressure level, to limit the pressure on the larger area, thereby controlling the bypass to establish the maximum system pressure.

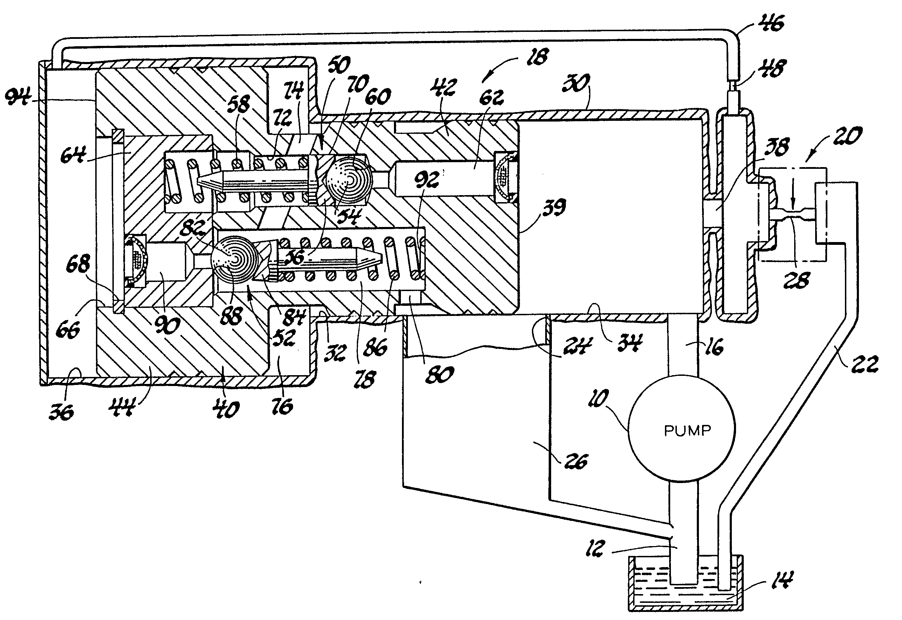

The single Figure of the drawing is a diagrammatic representation of a power steering system incorporating a demand-responsive flow control valve mechanism in accordance with the present invention.

The power steering system shown in the drawing includes a pump 10 which draws fluid through a passage 12 from a reservoir 14. The pump 10 delivers fluid pressure through a passage 16 to a flow control valve, generally designated 18, which in turn delivers the fluid by way of a power steering gear, designated 20. The power steering gear 20 returns fluid via a passage 22 to the reservoir 14.

The flow control valve 18 has a bypass port 24 which is connected to a passage 26 for returning excess pump discharge flow to the reservoir 14 or to the pump 10 through the passage 12. The pump 10 and the steering gear 20 are of conventional design. It is possible for example to use a pump constructed as described in US-A-4 386 891 or US-A-4 373 871; the steering gear may for example be constructed as described in US-A-3 505 899.

The pump 10 can be either the type having an integral reservoir or the type having a separate reservoir. The steering gear 20 can be either the integral type of steering gear or a rack and pinion type of steering gear. In either event, the steering gear 20 will include a variable-demand orifice (restriction) 28, which in the present system will provide a demand regulator orifice for the flow control valve 18.

The flow control valve 18 includes a housing 30 having formed therein a stepped bore 32 with a small-diameter bore portion 34 and a large-diameter bore portion 36. The small-diameter bore portion 34 is in fluid communication with the bypass port 24, and has, disposed at one end thereof, a flow-regulating orifice (restriction) 38 through which fluid flow to the steering gear 20 must pass.

The bore 32 has slidably disposed therein a valve spool 40 including a small-diameter portion (land) 42 slidably disposed in the bore 34, and a large-diameter portion (land) 44 slidably disposed in the large-diameter portion 36. The bore 34 and therefore the right-hand end 39 of the valve spool 40 is in fluid communication with the passage 16 of the pump 10.

The bore 34 is in fluid communication with the discharge of the pump 10 by way of a passage 46 which is connected downstream of the flow-regulating orifice 38. The passage 46 includes a restriction 48 which is disposed between the downstream side of the orifice 38 and the large-diameter portion 36.

The valve spool 40 has incorporated therewith a pair of check valves, generally designated 50 and 52. The check valve 50 includes a ball 54, a ball seat 56, a spring 58 and a valve seat 60. The valve seat 60 is formed integrally with the valve spool 40, and is connected by way of a passage 62 to the discharge pressure of the pump 10 which is present in the bore 34.

The spring 58 is compressed between the ball seat 56 and a plug member 64 secured in a bore 66 and retained in the valve spool 40 by a lock ring 68. The spring 58 determines the pressure which must be present in the passage 62 before the ball 54 will move leftwardly away from the valve seat 60. The ball seat 56 has a cylindrical portion 70 which is slidably disposed in a valve-fit relationship with a bore 72 formed in the valve spool 40.

The bore 72 is intersected by a cross-drilled passage 74 which is also in communication with an area 76 formed by the difference in the diameters of the lands 42 and 44. The cross-drilled passage 74, and therefore the area 76, will be placed in fluid communication with the discharge of the pump 10 by way of the passage 62 when the check valve 50 has been moved sufficiently to the left for the cylindrical portion 70 to have cleared the opening of passage the 74.

The passage 74 is also in fluid communication with a bore 78 which houses the check valve 52, and the bore 78 is in fluid communication with the bypass port 24 by way of a passage 80. The pressure in the bore 78 will therefore be equal to the pressure in the bypass port 24. The pressure acting on the area 76 will also be equal to the pressure in the bypass port 24 except that, when the cylindrical portion 70 of the ball seat 56 permits fluid communication between the area 76 and the bore 72, communication between the area 76 and the bore 78 is discontinued by the closing of a portion of the passage 74 between the bores 72 and 78 by the cylindrical portion 70.

The check valve 52 includes a ball 82, a ball seat 84, a spring 86 and a valve seat 88. The valve seat 88 is formed integrally with the plug 64, and is in fluid communication by way of a passage 90 with the bore 36. The spring 86 is compressed between the ball seat 84 and a circular surface 92 formed at the end of the bore 78. The pressure at which the ball 82 will move rightwardly away from the valve seat 88 is determined by the force in the spring 86, which is in turn determined by the position of the plug 64. By appropriate selection of the spring rates and spring sizes, the check valves 50 and 52 can be designed to operate at different pressures.

During operation, the pump 10 supplies fluid under pressure by way of the flow-regulating orifice 38 to the power steering gear 20. The fluid passes through the variable-demand orifice 28 and back to the reservoir 14. The right-hand end 39 of the valve spool 40 is subject to pump discharge pressure, and the left-hand end 94 of the valve spool 40 is subject to the system pressure downstream of the flow-regulating orifice 38. As is well known, fluid pressure will increase when flow must pass through a restriction.

With initial flow from the pump 10, the flow through the orifice 38 will not be sufficient to significantly increase the pump discharge pressure, such that the ends 39 and 94 of the valve 40 will be subject to the same pressure. Due to the large area of the end 94, the valve spool 40 will move rightwardly to close the bypass port 24. As the bypass port 24 closes, pump discharge pressure will tend to increase, and the volume of pump discharge through the orifice 38 and the steering gear 20 will increase. The fluid flow will increase until the pressure acting upstream of the orifice 38, in combination with the area of the end surface 39, is sufficient to cause the valve spool 40 to open the bypass port 24 against the force of the fluid pressure downstream of the orifice 38 acting on the area of the end 94 of the valve spool 40.

If the vehicle is being driven straight ahead, that is, with no steering manoeuvre being effected, the pressure drop across the variable-demand orifice 28 will be a minimum. Therefore, the back pressure, or system idle pressure, on the pump 10 will be a minimum, such that overall system losses will be very low. When a steering manoeuvre is initiated by the vehicle operator, the variable-demand orifice 28 will decrease in area, so causing an increase in the discharge pressure from the pump 10. This increased pressure is communicated via the passage 46 and the bore 34 to the respective areas of the ends 39 and 94, and since the area of the end 94 is larger, this will result in rightward movement of the spool 40, so decreasing the opening of the bypass port 24 and thereby increasing the discharge flow through the flow-regulating orifice 38. The valve spool 40 will move rightwardly until the flow through the regulating orifice 38 satisfies the pressure requirements for the respective areas of the ends 39 and 94 of the valve spool 40.

As the steering force required increases, the demand orifice 28 will be decreased due to increased operator input. At a predetermined pressure level, representing the maximum desirable steering force, the valve 50 will be unseated into moving leftwardly in the bore 72 until fluid pressure is acting on the area 76. At this time the valve spool 40 will be balanced, since the area of the end surface 39 plus the area 76 will be equal to the area of the end surface 94. The valve spool 40 will thereby move quite freely should excess fluid flow need to be bypassed. However, it is necessary at this time that the flow-regulating orifice 38 continue to be satisfied. If the operator continues to request steering demand, the demand orifice 28 will be completely closed. This can occur when the steering gear mechanism has reached either the left or right stop position or the turning wheel of the vehicle is against a barrier such as a kerb.

When the demand orifice 28 is completely closed or substantially closed, the check valve 52 will unseat, permitting fluid flow from the bore 36 through the bore 78 and the passage 80 to the bypass port 24. As fluid flows from the bore 36, a pressure drop will occur in the passage 46 at the restriction 48. Due to flow through the restriction 48, a pressure unbalance will occur between the areas of the valve end 39 and area 76 and the area of the end 94. There will be a resultant leftward force on the valve spool 40, permitting opening of the bypass port 24. This increased opening of the bypass port 24 is required since fluid flow through the flow-regulating orifice 38 will be a minimum.

At this time, the flow-regulating function will be taken away from the regulating orifice 38 and provided by the restriction 48. Since the restriction 48 is considerably smaller than the orifice 38, a much smaller fluid flow will create the desired pressure differential between the right-facing areas of the area 76 and the area of the end 39 and the left-facing area of the end 94.

The demand-responsive flow regulator valve described above does not require a spring member to urge the valve spool 40 to close the bypass port 24, whereas with a conventional flow-type regulator valve such a spring is necessary. The use of a spring member necessitates a larger minimum system pressure, such that, when a steering demand is not present, the system pressure operates at a level greater than the pressure level necessary with the present invention.

Accordingly, a demand-responsive flow control valve mechanism in accordance with the present invention can provide improved efficiency and increased economy as compared with prior-art flow-responsive types of system.

Claims:

1. A demand-responsive flow control valve mechanism in which a slidable valve member (40) is responsive to pump (10) discharge pressure and is pressure-balanced to control the opening of a by-pass port (24), characterised in that, for use in a hydraulic fluid pump system having a flow-regulating orifice (38) and a demand-regulated orifice (28), the valve mechanism comprises a slidable valve member (40) with a first pressure-responsive area (39) subject to pump pressure upstream of both orifices (38 and 28), a second and larger pressure-responsive area (94) subject to system pressure downstream of the flow-regulating orifice (38) and upstream of the demand-regulated orifice (28), a third pressure-responsive area (76) equal in size to the difference between the first and second pressure-responsive areas (39 and 94), first regulator valve means (50) for connecting the third pressure-responsive area (76) to the pump (10) discharge pressure when the pump discharge pressure reaches a predetermined value, second regulator valve means (52) for limiting the pressure operable on the second pressure-responsive area (94) at a higher pump discharge pressure, and a bypass port (24) controlled by the slidable valve member (40), the valve mechanism being responsive to the pressure forces acting in opposition on the first and second pressure-responsive areas (39 and 94) to open the bypass port (24) for the bypassing of excess pump discharge as determined by the flow-regulating orifice (38) when the demand-regulated orifice (28) is fully opened, and the valve mechanism reducing the bypass port opening as pressure demand increases with closing of the demand-regulated orifice (28), the valve mechanism being substantially pressure-balanced at the said first predetermined pressure value, and the valve mechanism opening for bypassing of substantially all of the pump discharge when the higher pump discharge pressure is reached.

2. A demand-responsive flow control valve mechanism according to claim 1, characterised in that the first regulator valve means comprises a ball check valve (50) including a bore (72), a cylindrical ball seat (56) slidably disposed in the bore (72), a ball (54), a valve seat (60) and a spring (58) urging the ball (54) against the valve seat (60) in opposition to pump pressure, the second regulator valve means comprises a ball check valve (52) including a bore (78), a ball (82) disposed in the bore (78), a valve seat (88) and a spring (86) urging the ball (82) against the seat (88) in opposition to the pressure downstream of the flow-regulating orifice (38), and a passage (80) connects the bores (72 and 78) of both of the ball check valves (50 and 52) and the third pressure-responsive area (76) to the bypass port (24), with the cylindrical ball seat (56) being operable to disconnect the first-mentioned bore (72) from the bypass port (24) when the respective ball (54) is moved to connect the third pressure-responsive area (76) to the pump pressure.

3. A demand-responsive flow control valve mechanism according to claim 1 or 2, characterised in that means including an exhaust passage (74) and the first regulator valve means (50) is effective to control fluid communication between the third area (76) and the bypass port (24).

0158450

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| A | FR-A-2 448 179 (C. DEMOMMEROT) <br> * Complete document * | 1 | B 62 D 5/06 <br> F 04 C 15/04 <br> F 15 B 13/02 |
| A | US-A-3 033 221 (D.S. STRADER) <br> * Complete document * | 1 | |
| A | FR-A-1 587 005 (R. BOSCH) | | |
| A | FR-A-2 444 179 (HOBOURN-EATON) | | |

--- TECHNICAL FIELDS SEARCHED (Int. Cl.4) ---

B 62 D 5/00
F 04 C 15/00
F 15 B 13/00
F 15 B 1/00
F 16 K 17/00

The present search report has been drawn up for all claims

| Place of search | Date of completion of the search | Examiner |
|---|---|---|
| BERLIN | 12-06-1985 | LEMBLE Y.A.F.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82